# EUROPÄISCHE PATENTANMELDUNG

(11) **EP 2 361 673 A2**
(43) Veröffentlichungstag der Anmeldung: **31.08.2011**
(21) Anmeldenummer: 11154905.1
(22) Anmeldetag: 17.02.2011
(51) Int. Cl.: B01F 15/00, B01F 7/00, A01C 3/02, C12M 1/107, F16M 11/00

(54) **Vorrichtung**

(30) Priorität: 21.02.2010 DE 102010000489
(71) Anmelder: Thürwächter Gmbh & Co.KG, 87477 Sulzberg (DE)
(72) Erfinder: Thürwächter, Paul, 87477, Sulzberg (DE)
(74) Vertreter: Hutzelmann, Gerhard

(57) **Zusammenfassung**

Vorrichtung zum Durchmischen des Inhaltes von Substratbehältern mit einem Rührwerk (1), bestehend aus einem Antriebsmotor (6), einer Verbindungsstange (7) und am vom Antriebsmotor (6) abgewandten Ende der Verbindungsstange (7) einem Rührpropeller (8), wobei eine Trageinrichtung (4) zur Aufnahme des Gewichtes des Rührwerkes (1) vorgesehen ist.

## Beschreibung

Die Erfindung bezieht sich auf eine Vorrichtung zum Durchmischen des Inhaltes von Substratbehältern mit einem Rührwerk, bestehend aus einem Antriebsmotor, einer Verbindungsstange und am vom Antriebsmotor abgewandten Ende der Verbindungsstange einem Rührpropeller.

Es sind verschiedene Rührwerke dieser Bauart, insbesondere zum Durchmischen von Gülle, aber auch gerade bei Biogasanlagen zum Durchmischen des zu vergasenden Materials bekannt.

Allen diesen Rührwerken ist gemein, daß diese nur an festen, besonders tragfähigen Becken angebracht werden können. Der Einsatz an offenen, oder mit Planen abgedeckten Becken ist weder vorgesehen noch möglich.

Der vorliegenden Erfindung liegt daher die Aufgabe zugrunde, eine Vorrichtung gemäß dem Oberbegriff des unabhängigen Anspruches vorzuschlagen, die auch bei flachen oder mit Planen abgedeckten Becken einsetzbar ist.

Diese Aufgabe wird erfindungsgemäß dadurch gelöst, daß eine Trageinrichtung zur Aufnahme des Gewichtes des Rührwerkes vorgesehen ist.

Damit wird das Rührwerk in Position gehalten und geführt.

Sehr vorteilhaft ist es auch, wenn eine Durchführung vorgesehen ist, die in eine nicht tragfähige Abdeckung des Substratbehälters einsetzbar ist und durch die das Rührwerk hindurchragt.

Damit kann eine dichte und bewegliche Durchführung geschaffen werden, die trotzdem nicht das Gewicht des Rührwerkes aufnehmen muss. Es ist auch denkbar, daß die Abdeckung durch die Durchführung in einer vorgegebenen Position gehalten wird. Zudem ist es denkbar, daß flexible Gärbehälter geschaffen werden können, durch deren Wandungn das Rüherwerk hindurchragt.

Ebenfalls sehr vorteilhaft ist es, wenn die Durchführung mit der Trageinrichtung verbunden ist.

Hierdurch werden Kraftübertragungen auf die Abdeckung des Substratbehälters vermieden.

Eine weitere sehr vorteilhafte Ausgestaltung der Erfindung liegt auch vor, wenn das Rührwerk gegenüber der Trageinrichtung und/oder der Durchführung schwenkbar und/oder verschiebbar ist, und/oder daß das Rührwerk um einen Drehpunkt schwenkbar ist, der wenigstens im wesentlichen in der Durchführung liegt.

Dadurch werden Relativbewegungen zwischen dem Rührwerk und der Abdeckung weitgehend vermieden. Zudem wird eine optimale Bewegbarkeit des Rührwerks im Substratbehälter sichergestellt.

Es hat sich erfindungsgemäß auch als äußerst vorteilhaft erwiesen, wenn die Trageinrichtung als Tragarm ausgebildet ist, der eine zusätzliche Stützstrebe gegen den Untergrund aufweisen kann.

Damit wird eine nochmals verbesserte Stabilität der Trageinrichtung gewährleistet. Auch horizontale Belastungen werden damit von der Konstruktion sicher aufgenommen.

Eine weitere sehr vorteilhafte Ausgestaltung der Erfindung liegt auch vor, wenn die Trageinrichtung eine längenverstellbare Strebe zur Einstellung der Vertikal- und oder Horizontalposition des Anlenkpunktes des Rührwerkes und/oder des Rührwerkes aufweist.

Damit kann nicht nur die Position des Anlenkpunktes des Rührwerkes, sondern auch die der Durchführung und die Position des Rührwerkes im Behälter eingestellt werden.

Gemäß einer weiteren sehr vorteilhaften Weiterbildung der Erfindung kann auch das Rührwerk lösbar mit der Trageinrichtung und der Durchführung verbunden sein.

Dadurch wird nicht nur der nachträgliche Einbau des Rührwerks in bestehende Substratbehälter erleichtert, sondern auch der Service und/oder der Austausch von Teilen kann sehr leicht durchgeführt werden.

Ebenfalls äußerst vorteilhaft ist es erfindungsgemäß, wenn die Durchführung eine flüssigkeits- und/oder gasdichte Abdichtung zur Verbindungsstange hin aufweist.

Damit kann der Substratbehälter dicht zur Umgebung abgeschlossen werden. Der Einsatz des Rührwerkes ist auch bei Substratbehältern denkbar, deren Abdeckung im Betrieb durch die entstehenden Gase angehoben und zumindest geringfügig aufgebläht wird.

Äußerst vorteilhaft ist es erfindungsgemäß auch, wenn die Verbindungsstange längsverschiebbar und/oder längenverstellbar ausgebildet ist.

Damit kann ein sehr großer Bereich im Substratbehälter erreicht werden. Eine gute Durchmischung wird sichergestellt.

Eine weitere sehr vorteilhafte Ausgestaltung liegt auch vor, wenn dem Propeller eine wenigstens teilweise umlaufende Schutzeinrichtung zugeordnet ist.

Dadurch wird einerseits verhindert, daß der Propeller auf dem Untergrund des Behälter direkt aufliegen kann und andererseits sichergestellt, daß der Propeller nicht etwa Behälterwandungen beschädigt, was vor allem bei flexiblen Wandungen ein Problem darstellen kann.

Im folgenden wird die Erfindung anhand eines Ausführungsbeispiels veranschaulicht.

Dabei zeigen:
- Fig. 1: eine schematische Darstellung eines erfindungsgemäßen Rührwerkes, welches in einem Substratbehälter mit einer flexiblen Abdeckung angeordnet ist,

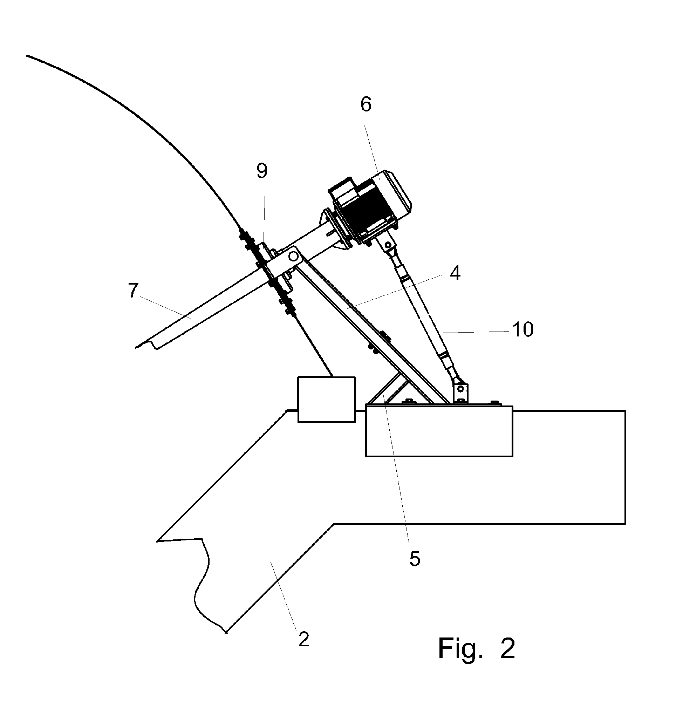

- Fig. 2: eine Detailansicht der Trageinrichtung mit Durchführung und Antriebsmotor,

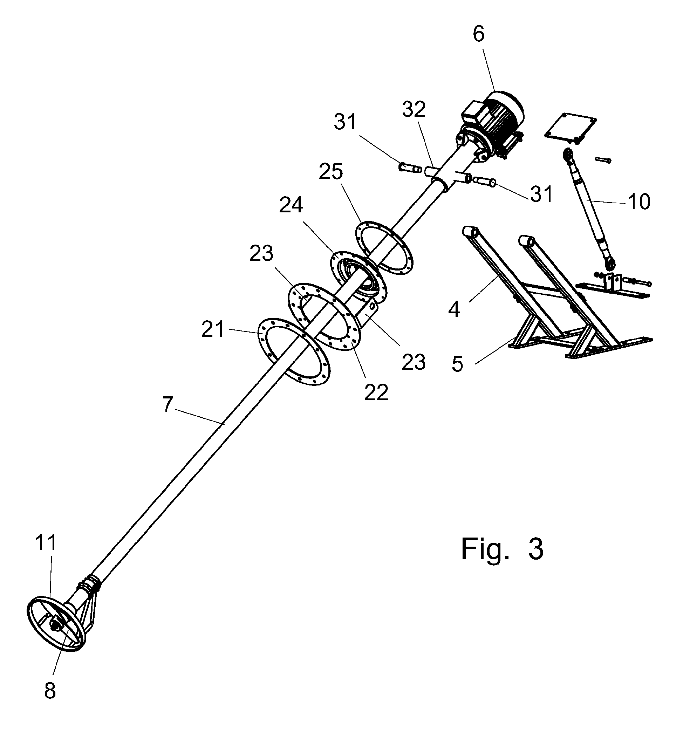

- Fig. 3: eine Explosionsdarstellung der Durchführung mit der Trageinrichtung, und

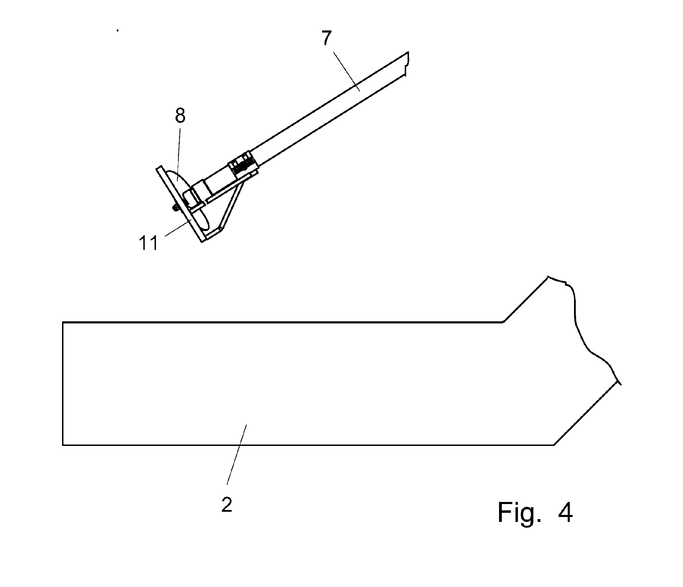

- Fig. 4: eine Detailansicht des Rührpropellers.

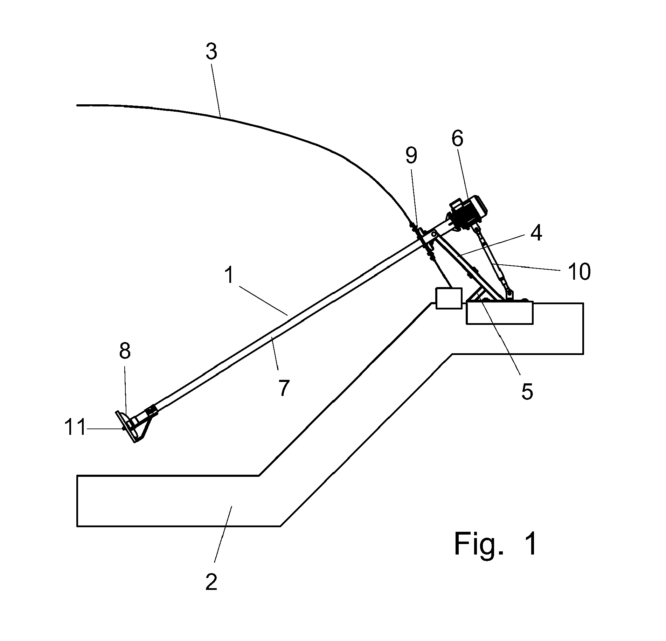

Mit 1 ist in Fig. 1 ein Rührwerk zum Durchmischen von Substrat in Behältern, insbesondere in Gärungsbehältern bezeichnet. Ein solcher Gährungsbehälter ist aus einer meistens schräg zur Mitte hin abfallenden Bodenrinne 2 und einer flexiblen Abdeckung 3 aufgebaut. Die Abdeckung 3 ist gasdicht mit der Bodenrinne 2 verbunden. Solche Behälter werden oftmals zur Erzeugung von Biogas aus Biomasse eingesetzt. Dabei wird das Substrat am einen Ende des Behälters in die Bodenrinne 2 eingeleitet und am anderen Ende die Reste nach dem Vergasungsprozess wieder ausgeleitet.

Dabei kommt es jedoch zu Ablagerungen von Substrat in der Bodenrinne 2, so daß keine ausreichende Vergasung stattfinden kann.

Um dies zu verhindern wird ein oder mehrere Rührwerke 1 am Rand der Bodenrinne vorgesehen. Diese sind auf einer Trageinrichtung 4 gelagert, welche die Last des jeweiligen Rührwerks 1 aufzunehmen vermag. Die Trageinrichtung 4 kann dabei als Strebe ausgebildet sein, die eine zusätzliche Stütze 5 aufweisen kann, so daß die Trageinrichtung 4 auch horizontale Kräfte aufzunehmen vermag.

Auf der Trageinrichtung 4 ruht das im wesentlichen aus einem Antriebsmotor 6, einem Verbindungsrohr 7 und am vom Antriebsmotor 6 abgewandten Ende des Verbindungsrohres 7 angeordneten Rührpropeller 8 bestehenden Rührwerk 1.

Das Rührwerk 1 ragt mit seinem Rührpropeller 8 in das Substrat in der Bodenrinne 2 hinein. Dazu ist das Verbindungrohr 7 durch die Abdeckung 3 geführt und dort mit einer Durchführung 9 abgedichtet.

Die Durchführung 9 ist dabei so angeordnet, daß diese zumindest in direkter Nähe zur Trageinrichtung 4 vorgesehen ist. So werden einerseits Bewegungen der Abdeckung 3 beim Bewegen des Rührwerkes 1 wenigstens weitgehend vermieden. Andererseits wird auch die Abdeckung 3 durch die Durchführung gehalten, wenn zum Beispiel der Substratbehälter neu beschickt wird.

Im Idealfall greift die Trageinrichtung 4 direkt an der Durchführung 9 an. Der Drehpunkt des Rührwerkes 1 liegt dann ziemlich genau in der Ebene der Abdeckung innerhalb der Durchführung 9.

Um die Position des Propellers 8 im Substrat vorgeben zu können und/oder um eine bestimmte Bewegungsbahn vorgeben zu können kann eine Sicherungs- und Stützstrebe 10 vorgesehen sein, die im Bereich des unteren Endes der Stützeinrichtung 4 angreift und mit ihrem anderen Ende beispielsweise am Antriebsmotor 6 anzugreifen vermag.

Durch diese Stützstrebe 10 wird der Abstand zwischen Antriebsmotor und Grund gehalten.

Der Propeller 8 wird vom Antriebsmotor 6 über eine nicht dargestellte Welle angetrieben. Diese Welle verläuft im Verbindungsrohr 7 und ist gegenüber diesem zum Beispiel mit Wellendichtringen gasdicht abgedichtet, so daß über das Verbindungsrohr kein Gas aus dem Behälter zu entweichen vermag. Zusätzlich wird so auch verhindert, daß Substrat in das Verbindungsrohr 7 eindringt.

Um den Propeller 8 ist ein Schutz 11 vorgesehen, der wenigstens einen Teilbereich der Propellerumfanges abdeckt und so verhindert, daß der Propeller direkt auf der Bodenrinne 2 aufliegen kann oder daß der Propeller 8 die Abdeckung 3 zu beschädigen vermag, wenn dieser aus dem Substrat gehoben wird, oder wenn die Abdeckung 3 absinkt.

Der Schutz 11 kann dabei als umlaufender Ring ausgebildet sein, der am Verbindungsrohr 7 befestigt ist.

Die Durchführung 9 besteht im wesentlichen aus einem Innenring 21, einem Tragring 22, an den Befestigungslaschen 23 angeformt sind, die mit der Trageinrichtung 4 verbindbar sind, einer flexiblen Dichtung 24 und einem Außenring 25. Durch diesen Aufbau wird eine absolut dichte Verbindung zwischen Verbindungsrohr 7 und der Abdeckung 3 geschaffen.

Der Innendurchmesser des Innenrings 21 und des Tragrings 22 sollte wenigstens so groß sein, wie der Durchmesser des Schutzes 11 über dem Propeller 8, so daß die Rühreinrichtung 1 aus dem Behälter einfach herausgezogen werden kann, ohne daß der Behälter entleert oder betreten werden müsste, wodurch dann Servicearbeiten sehr einfach durchführbar sind.

Um die Rühreinrichtung 1 herauszuziehen wird dann einfach der Außenring 25 abgeschraubt und zusammen mit der Dichtung 24 entfernt.

Die Durchführung 9 kann beispielsweise über Laschen 23 und mit einem Bolzen 31 1 mit der Trageinrichtung 4 verbunden werden. Der Bolzen 31 kann beispielsweise gleichzeitig in eine weitere Halteeinrichtung 32 eingreifen, welche am Verbindungsrohr 7 angeordnet ist und die Einschieb-Position der Rühreinrichtung 1 definiert und zugleich das Gewicht der Rühreinrichtung 1 auf die Trageinrichtung 4 überträgt.

Es ist denkbar, daß mehrere Bolzen 31 vorgesehen sein können.

Zum Einbau der Rühreinrichtung 1 in bestehende Behälter wird die Trageinrichtung 4 angebracht und so die Position der Durchführung 9 an der Abdeckung 3 bestimmt. Dann kann ein entsprechendes Loch in die Abdeckung 9 eingebracht werden. Hierauf wird der Innenring 21 und der Tragring 22 montiert. Über die Laschen 23 kann der Tragring 22 bereits mit der Trageinrichtung 4 verbunden und so die Abdeckung 3 in der späteren Position gehalten werden. Weitere Durchführungen 9 können nun ebenso montiert werden.

Erst anschließend werden die Rühreinrichtungen 1 durch die Öffnungen der Durchführungen 9 in den Behälter eingeführt. Die Rühreinrichtung 1 wird mit der Trageinrichtung zum Beispiel durch Bolzen 31 verbunden. Danach wird die Dichtung 24 und der Außenring 25 mit dem Innenring 21 und dem Tragring 22 verbunden und so die Abdeckung wieder verschlossen.

Dabei liegt die Dichtung 24 dicht am Verbindungrohr 7 an.

Die Dichtung 24 kann beispielsweise als Gummimanschette ausgebildet sein. Es ist aber auch denkbar, daß eine wenigstens teilweise flexible Stahldichtung vorgesehen wird.

## Patentansprüche

1. Vorrichtung zum Durchmischen des Inhaltes von Substratbehältern mit einem Rührwerk (1), bestehend aus einem Antriebsmotor (6), einer Verbindungsstange (7) und am vom Antriebsmotor (6) abgewandten Ende der Verbindungsstange (7) einem Rührpropeller (8), **dadurch gekennzeichnet, daß** eine Trageinrichtung (4) zur Aufnahme des Gewichtes des Rührwerkes (1) vorgesehen ist.

2. Vorrichtung nach Anspruch 1, **dadurch gekennzeichnet, daß** eine Durchführung (9) vorgesehen ist, die in eine nicht tragfähige Abdeckung (9) des Substratbehälters einsetzbar ist und durch die das Rührwerk (1) hindurchragt.

3. Vorrichtung nach Anspruch 2, **dadurch gekennzeichnet, daß** die Durchführung (9) mit der Trageinrichtung (4) verbunden ist.

4. Vorrichtung nach einem der Ansprüche 1, 2 oder 3, **dadurch gekennzeichnet, daß** das Rührwerk (1) gegenüber der Trageinrichtung (4) und/oder der Durchführung (9) schwenkbar und/oder verschiebbar ist, und/oder daß das Rührwerk (1) um einen Drehpunkt schwenkbar ist, der wenigstens im wesentlichen in der Durchführung (9) liegt.

5. Vorrichtung nach einem der vorangehenden Ansprüche, **dadurch gekennzeichnet, daß** die Trageinrichtung als Tragarm (4) ausgebildet ist, der eine zusätzliche Stützstrebe (5) gegen den Untergrund aufweisen kann.

6. Vorrichtung nach einem der vorangehenden Ansprüche, **dadurch gekennzeichnet, daß** die Trageinrichtung (4) eine längenverstellbare Strebe (10) zur Einstellung der Vertikal- und/oder Horizontalposition des Anlenkpunktes des Rührwerkes (1) und/oder des Rührwerkes (1) aufweist.

7. Vorrichtung nach einem der vorangehenden Ansprüche, **dadurch gekennzeichnet, daß** das Rührwerk (1) lösbar mit der Trageinrichtung (4) und der Durchführung (9) verbunden ist.

8. Vorrichtung nach einem der vorangehenden Ansprüche, **dadurch gekennzeichnet, daß** die Durchführung (9) eine flüssigkeits- und/oder gasdichte Abdichtung zur Verbindungsstange (7) hin aufweist.

9. Vorrichtung nach einem der vorangehenden Ansprüche, **dadurch gekennzeichnet, daß** die Verbindungsstange (7) längsverschiebbar und/oder längenverstellbar ausgebildet ist.

10. Vorrichtung nach einem der vorangehenden Ansprüche, **dadurch gekennzeichnet, daß** dem Propeller (8) eine wenigstens teilweise umlaufende Schutzeinrichtung (11) zugeordnet ist.
